# EUROPÄISCHE PATENTSCHRIFT

(11) **EP 2 426 282 B1**
(45) Veröffentlichungstag und Bekanntmachung des Hinweises auf die Patenterteilung: **25.10.2017**
(21) Anmeldenummer: 10405166.9
(22) Anmeldetag: 07.09.2010
(51) Int. Cl.: E03D 9/02, E03D 9/03, C02F 1/78, E03D 13/00, A61L 2/03, C02F 1/467

(54) **Spülvorrichtung**
Flush device
Dispositif de rinçage

(43) Veröffentlichungstag der Anmeldung: 07.03.2012
(73) Patentinhaber: Geberit International AG, 8645 Jona (CH)
(72) Erfinder: Widler, Roland, 8335 Hittnau (CH)
(74) Vertreter: Frischknecht, Harry Ralph

(56) Entgegenhaltungen:
- EP-A1- 1 431 249
- WO-A1-2006/092125
- WO-A1-2008/061262
- DE-A1-102005 059 504
- DE-U1-202004 003 717
- JP-A- 9 221 808
- JP-A- 10 338 958
- JP-A- 2003 290 768

## Beschreibung

### TECHNISCHES GEBIET

Die vorliegende Erfindung betrifft eine Spülvorrichtung zur Behandlung von Spülwasser für ein Urinal oder ein Wasserklosett nach dem Oberbegriff von Anspruch 1 und ein Verfahren nach dem Anspruch 12.

### STAND DER TECHNIK

Aus dem Stand der Technik ist bekannt, dass durch im Wasser vorhandene Oxidationsmittel, wie Ozon, die Keimzahl im Wasser verkleinert werden kann, was eine desinfizierende Wirkung hat.

Beispielsweise zeigt die DE 20 2004 003 717 U eine Vorrichtung, bei welcher Ozon durch ein Entladungsmodul aus Sauerstoff gewonnen wird, und dann über eine Wasserstrahlpumpe dem Wasser zugeführt wird und dort gelöst wird. Das mit Ozon angereicherte Wasser wird dann über einen Wasserablauf seinem Bestimmungsort zugeführt.

Nachteilig an dieser Lösung ist, dass insbesondere bei grossen Spülvolumen nicht genügend Ozon im Wasser gelöst werden kann. Zudem ist der Druckabfall des Wassers über der Wasserstrahlpumpe sehr gross, was dazu führt, dass der Spülvorgang nicht effizient ist.

Die JP 9221808A zeigt eine Vorrichtung die eine im Spülwasser angeordnete elektrochemische Zelle zur Herstellung eines Oxidationsmittels aus dem Spülwasser und eine Mischeinheit zur Mischung des Spülwassers mit dem Oxidationsmittel umfasst. Das Oxidationsmittel enthaltende Spülwasser wird dann über Spülventile in Wasserklosetts eingeleitet.

### DARSTELLUNG DER ERFINDUNG

Ausgehend von diesem Stand der Technik, liegt der Erfindung die Aufgabe zugrunde, eine Vorrichtung zur Desinfektion des Spülwassers eines Urinals oder einer Toilette anzugeben, wobei die Vorrichtung die Nachteile des Standes der Technik überwinden soll. Insbesondere soll die Lebensdauer der Spüleinheit entsprechend verlängert werden.

Diese Aufgabe wird durch die Merkmale von Anspruch 1 gelöst, demgemäss umfasst eine Spülvorrichtung für ein Urinal oder ein Wasserklosett eine Spüleinheit mit einem Spülventil und einem Betätigungselement zur Auslösung des Spülvorgangs, wobei während des Spülvorgangs Spülwasser dem Urinal bzw. Wasserklosett zugeführt wird, und eine Desinfektionseinheit zur Desinfektion des Spülwassers. Die Desinfektionseinheit umfasst eine im Spülwasser angeordnete elektrochemische Zelle zur Herstellung eines Oxidationsmittels aus dem Spülwasser und eine Mischeinheit zur Mischung des Spülwassers mit dem Oxidationsmittel. Die Desinfektionseinheit ist in Strömungsrichtung des Spülwassers gesehen nach der Spüleinheit angeordnet. Dadurch kommen die Teile der Spüleinheit nicht in Kontakt mit dem Oxidationsmittel, wodurch keine korrosiven Effekte zwischen Spüleinheit und Oxidationsmittel eintreten können. Hierdurch wird die Lebensdauer der Spüleinheit verlängert.

Mit der Anordnung der elektrochemischen Zelle kann das Oxidationsmittel direkt aus dem Spülwasser gebildet werden, wobei die Konzentration des Oxidationsmittels für die Desinfektionswirkung immer ausreichend ist. Zudem werden die Druckverluste aufgrund der Anordnung im Spülwasser vermindert, was ebenfalls vorteilhaft ist.

Vorzugsweise ist die elektrochemische Zelle derart angeordnet, dass diese dauernd mit Spülwasser benetzt ist, wodurch die Lebensdauer einer derartigen Zelle erhöht werden kann.

Bevorzugterweise ist die Desinfektionseinheit in unmittelbarer Nähe der Spüleinheit angeordnet, wobei sich die Desinfektionseinheit dann direkt an die Spüleinheit anschliesst.

Vorzugsweise ist die elektrochemische Zelle im wesentlichen nur während der Dauer des Spülvorganges aktiviert, so dass das Oxidationsmittel während des Durchflusses von Spülwasser gebildet wird. Dadurch kann eine bezüglich des Stromverbrauches sehr vorteilhafte Lösung geschaffen werden.

Vorzugsweise umfasst die Spüleinheit ein Betätigungselement, mit welchem das Spülventil betätigt wird, wobei das Betätigungselement mit einem Schalter in Verbindung steht, über welchem die elektrochemische Zelle bei Betätigung mit elektrischer Energie versorgt wird, wobei der Schalter nach Betätigung vorzugsweise zeitverzögert öffnet, so dass die elektrochemische Zelle während des gesamten Spülvorgangs aktiviert ist. Folglich wird die elektrochemische Zelle während der gesamten Öffnungsdauer des Spülventils mit elektrischer Energie versorgt und ist somit während der gesamten Öffnungsdauer aktiviert.

Vorzugsweise ist die Desinfektionseinheit ein von der Spüleinheit separat ausgebildetes Modul, dadurch kann ein einfach nachrüstbares Element geschaffen werden. Alternativ ist die Desinfektionseinheit ein integraler Bestandteil der Spüleinheit.

Vorzugsweise ist die Mischeinheit ein statischer Mischer.

Vorzugsweise ist die elektrochemische Zelle in einem ersten Aufnahmeraum angeordnet, und die Mischeinheit ist in einem zweiten Aufnahmeraum angeordnet, welcher in Strömungsrichtung des Spülwassers gesehen nach dem ersten Aufnahmeraum angeordnet ist, wobei die beiden Aufnahmeräume vorzugsweise in einem gemeinsamen Gehäuse angeordnet sind.

Weitere Ausführungsformen sind in den abhängigen Ansprüchen angegeben.

### KURZE BESCHREIBUNG DER ZEICHNUNG

Bevorzugte Ausführungsformen der Erfindung werden im Folgenden anhand der Zeichnungen beschrieben, die lediglich zur Erläuterung dienen und nicht einschränkend auszulegen sind. In der Zeichnung zeigen:
- Fig. 1: eine schematische Ansicht einer Spülvorrichtung mit einer Desinfektionseinheit gemäss der vorliegenden Erfindung in Verbindung mit einem Urinal;
- Fig. 2: eine schematische Ansicht der Spülvorrichtung nach Figur 1;
- Fig. 3: eine schematische Ansicht einer Desinfektionseinheit; und
- Fig. 4: eine perspektivische Ansicht eines Einbaubeispiels einer Spülvorrichtung nach einer der vorhergehenden Figuren.

### BESCHREIBUNG BEVORZUGTER AUSFÜHRUNGSFORMEN

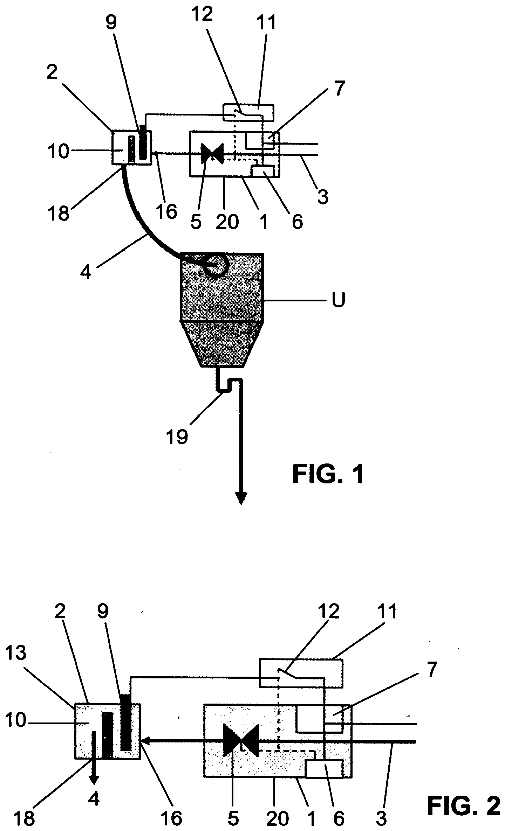

In der Figur 1 wird eine Spülvorrichtung für ein Urinal U oder ein Wasserklosett schematisch darstellt. Die Spülvorrichtung umfasst im wesentlichen eine Spüleinheit 1 zur Zuführung von Spülwasser in das Urinal U oder in das Wasserklosett und eine Desinfektionseinheit 2 zur Desinfektion des Spülwassers. Als Spülwasser wird dabei das Wasser bezeichnet, welches ausschliesslich dem Urinal U bzw. Wasserklosett zugeführt wird und nicht zurück in den Kreislauf von Trinkwasser gelangen kann. Nachfolgend wird meist die Ausdrucksweise Urinal verwendet, wobei darunter auch jede andere Toilettenart verstanden wird.

Die Spüleinheit 1 wird über eine Rohrleitung 3 mit Frischwasser versorgt. Nach dem Eintritt in die Spüleinheit 1 wird das Frischwasser als Spülwasser weitergeführt, wobei es dann durch die Desinfektionseinheit 2 zum Urinal U gelangt. In der in Figur 1 gezeigten Ausführungsform steht die Desinfektionseinheit 2 über ein Rohrleitungsstück oder einen Schlauch 4 mit dem Urinal U in Verbindung. Das Spülwasser lässt sich nach erfolgter Spülung des Urinals U über einen Siphon 19 aus dem Urinal U dem Abwassernetz zuleiten.

Die Spüleinheit 1 umfasst im wesentlichen ein Spülventil 5 und ein Betätigungselement 6 zur Betätigung des Spülventils 5. Das Betätigungselement 6 kann beispielsweise ein Näherungssensor, ein Drucktaster oder eine mechanische Betätigungsplatte sein. Sofern es sich um ein elektronische Betätigungselement handelt, umfasst die Spüleinheit zusätzlich ein Netzgerät 7, welches mit elektrischer Energie versorgt wird und bei Aktivierung des Betätigungselementes 6 das Spülventil 5 mit elektrischer Energie versorgt.

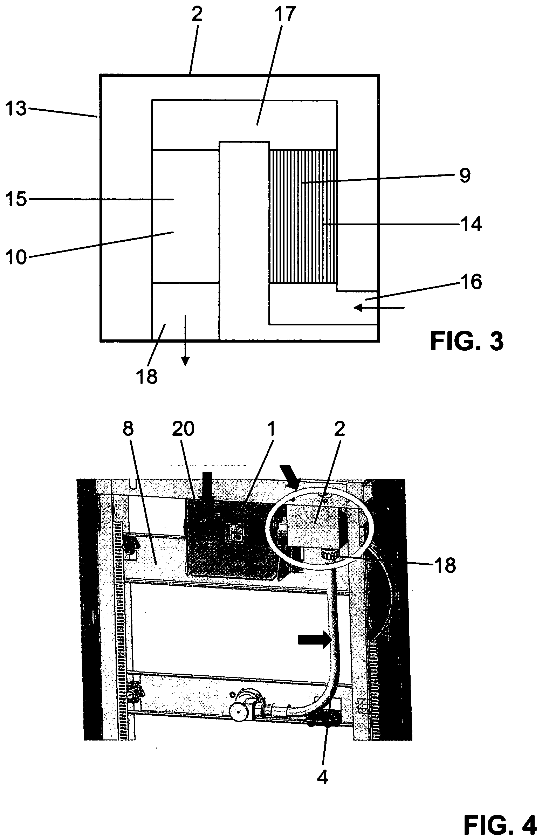

Vorzugsweise hat die Spüleinheit 1 die Gestalt eines eigenständigen Moduls und kann, wie in der Figur 4 gezeigt, an einer Unterkonstruktion 8 befestigt werden. Dabei sind alle Elemente der Spüleinheit 1 in einem Gehäuse 20 zusammengefasst.

Die Desinfektionseinheit 2 umfasst eine im Spülwasser angeordnete elektrochemische Zelle 9. Die elektrochemische Zelle 9 dient der Herstellung eines Oxidationsmittels aus dem Spülwasser. Weiter umfasst die Desinfektionseinheit 2 eine Mischeinheit 10 zur Mischung des Spülwassers und dem Oxidationsmittel, wobei die Mischeinheit 10 in Strömungsrichtung gesehen nach der elektrochemischen Zelle 9 angeordnet ist. In dieser werden die von der elektrochemischen Zelle 9 erzeugten Stoffe und insbesondere oxidative Stoffe, beispielsweise Ozon oder Chlor, mit dem Wasser gemischt. Die oxidativen Stoffe werden somit gleichmässig im Wasser verteilt.

Die elektrochemische Zelle 9 wird über ein Netzgerät 11 mit elektrischer Energie versorgt. Bevorzugterweise erfolgt die Versorgung nur über die Zeitdauer eines Spülvorganges weshalb hierfür ein Schalter 12 angeordnet ist, welcher mit dem Betätigungselement 6 in Verbindung steht. Sobald das Betätigungselement 6 betätigt wird, erfolgt eine Betätigung des Schalters 12, womit die elektrochemische Zelle 9 mit elektrischer Energie versorgt wird. Vorzugsweise bleibt der Schalter 12 dann zeitverzögert zum Betätigungselement 6 geschlossen, so dass während des ganzen Spülvorgangs die elektrochemische Zelle 9 mit elektrischer Energie versorgt wird. Folglich wird das Oxidationsmittel während des Durchflusses des Spülwassers produziert und anschliessend durch die Mischeinheit 10 mit dem Wasser vermischt.

Die oxidativen Stoffe zerstören bzw. mineralisieren die vorhandenen organischen Stoffe und damit beispielsweise schädliche Keime sehr schnell. Das aus der Desinfektionseinheit austretende Wasser enthält somit im Wesentlichen keine aktiven Stoffe mehr und ist damit desinfiziert. Das vorbehandelte Spülwasser wirkt dabei reinigend auf die Oberfläche des Urinals U bzw. die Toilettenschüssel und auch auf den Siphon 19. Mit anderen Worten kann auch gesagt werden, dass das Spülwasser hier im Wesentlichen als Transportmittel dient, um die Oxidationsmittel in den Bereich des Siphons 19 zu bringen. Versuche haben gezeigt, dass die Bildung von Urinstein und auch von anderen Ablagerungen sowie übler Geruch im Bereich des Siphons 19 mit einer derartigen Desinfektionsvorrichtung massiv verkleinert werden konnte.

Die elektrochemische Zelle 9 ist vorzugsweise als Modul ausgebildet und besitzt in an sich bekannter Weise eine hier nicht gezeigte Anode sowie eine Kathode. Ist an die Elektroden eine Gleichspannung angelegt, so werden aufgrund an sich bekannter chemischer Reaktionen an den Elektroden oxidierende Stoffe erzeugt, welche auf mikrobiologische Keime im Wasser desinfizierend wirken. Die Elektroden sind beispielsweise solche, die mit einer bordotierten Diamant-Beschichtung versehen sind. Die Desinfektionseinheit 2 ist bezüglich der Strömungsrichtung des Spülwassers nach der Spüleinheit 1 angeordnet. Bei dieser Ausführungsform hat es sich als vorteilhaft für die Reinigungswirkung erwiesen, wenn die beiden Einheiten 1, 2 möglichst in kurzer Distanz zum Urinal U angeordnet sind. Die Anordnung nach der Spüleinheit 1 erlaubt aber eine besonders gute Trennung zwischen Frischwasser und Spülwasser. Aufgrund des Spülventils 5 und des Druckes von der Wasserversorgung kann kein Spülwasser in den Frischwasserabschnitt zurück gelangen. Insofern wird bei dieser Anordnung verhindert, dass mit dem Oxidationsmittel behandeltes Wasser in den Frischwasserabschnitt zurück fliesst.

Anhand der Figuren 2 und 3 wird nun der Aufbau der Desinfektionseinheit 2 sowie dessen Verbindung mit dem Spülventil im Detail erläutert.

Die elektrochemische Zelle 9 und die Mischeinheit 10 der Desinfektionseinheit 2 sind vorzugsweise in einem gemeinsamen Gehäuse 13 angeordnet. Die elektrochemische Zelle 9 ist dabei in Strömungsrichtung vor der Mischeinheit 10 angeordnet und liegt in einem ersten Aufnahmeraum 14 des Gehäuses 13. Die Mischeinheit 10 ist in einem zweiten Aufhahmeraum 15 angeordnet. Das Spülwasser gelangt über einen Einlass 16 in den ersten Aufnahmeraum 14 und von dort über eine Durchtrittsöffnung 17 in den zweiten Aufnahmeraum, von wo es über den Auslass 18 das Gehäuse 13 wieder verlässt. Der Auslass 18 steht dabei mit dem Schlauch 4 in Verbindung.

Der erste Aufnahmeraum 14 ist so ausgebildet, dass die elektrochemische Zelle 9 zu jedem Zeitpunkt mit dem Spülwasser benetzt ist, also sowohl während der Spülung als auch zwischen zwei Spülungen. Dies kann über zwei unterschiedliche Anordnungen erzielt werden. Beispielsweise ist es denkbar, dass die elektrochemische Zelle 9 bezüglich dem Einlass und dem Auslass in einem Siphon angeordnet ist. Demnach liegt die elektrochemische Zelle 9 bezüglich der Schwerkraft unter dem Einlass 16 und dem Auslass 18, so dass im Bereich zwischen Einlass 16 und Auslass 18 zu jeder Zeit Wasser zurückbleibt.

In der Figur 3 wird eine weitere mögliche Ausführungsform gezeigt, bei welcher die elektrochemische Zelle 9 dauernd mit Wasser benetzt ist. Der Einlass 16 liegt bezüglich der Schwerkraft unterhalb der Durchtrittsöffnung 17. Der Auslass 18 liegt ebenfalls unter der Durchtrittsöffnung 17. Nach dem Spülvorgang schliesst sich das Spülventil 5, das bezüglich der Strömungsrichtung vor dem Einlass 16 liegt. Der Auslass 18 steht dann über den Schlauch 4 in Verbindung. Aufgrund des Unterdruckes zwischen Schlauch 4 und Spülventil 5 kann das Wasser nicht aus dem Schlauch 4 austreten, womit verhindert wird, dass Wasser aus dem Aufnahmeraum 14 fliesst.

Bezüglich der Verminderung von möglichen Strömungsverlusten hat es sich als vorteilhaft herausgestellt, wenn die Querschnitte der spülwasserführenden Elemente 14 bis 17 durch die gesamte Desinfektionseinheit 2 möglichst konstant bleiben. Als Querschnitt wird dabei die Fläche der lichten Weite des jeweiligen Elements senkrecht zur Strömungsrichtung betrachtet.

Vorzugsweise ist die Spüleinheit 1 und die Desinfektionseinheit so dimensioniert, dass das Spülwasser mit einem Volumenstrom im Bereich von 4 bis 20 Liter pro Minute (l/min), insbesondere 6 l/min oder im Bereich von 12 l/min bis 181/min liegt.

### BEZUGSZEICHENLISTE

- 1: Spüleinheit
- 2: Desinfektionseinheit
- 3: Rohrleitung
- 4: Schlauch / Rohrleitungsstück
- 5: Spülventil
- 6: Betätigungselement
- 7: Netzgerät
- 8: Unterkonstruktion
- 9: elektrochemische Zelle
- 10: Mischeinheit
- 11: Netzgerät
- 12: Schalter
- 13: Gehäuse
- 14: erster Aufnahmeraum
- 15: zweiter Aufnahmeraum
- 16: Einlass
- 17: Durchtrittsöffnung
- 18: Auslass
- 19: Siphon
- 20: Gehäuse
- U: Urinal

## Patentansprüche

1. Spülvorrichtung für ein Urinal (U) oder ein Wasserklosett umfassend eine Spüleinheit (1) mit einem Spülventil (5) und einem Betätigungselement (6) zur Auslösung des Spülvorgangs, wobei während des Spülvorgangs Spülwasser dem Urinal (U) bzw. Wasserklosett zugeführt wird, und eine Desinfektionseinheit (2) zur Desinfektion des Spülwassers, wobei die Desinfektionseinheit (2) eine im Spülwasser angeordnete elektrochemische Zelle (9) zur Herstellung eines Oxidationsmittels aus dem Spülwasser und eine Mischeinheit (10) zur Mischung des Spülwassers mit dem Oxidationsmittel umfasst, **dadurch gekennzeichnet, dass** die Desinfektionseinheit (2) in Strömungsrichtung des Spülwassers gesehen nach der Spüleinheit (1) angeordnet ist.

2. Spülvorrichtung nach Anspruch 1, **dadurch gekennzeichnet**, **dadurch gekennzeichnet, dass** die elektrochemische Zelle (9) derart angeordnet ist, dass diese dauernd mit Spülwasser benetzt ist.

3. Spülvorrichtung nach einem der vorhergehenden Ansprüche, **dadurch gekennzeichnet, dass** die elektrochemische Zelle (9) im wesentlichen nur während der Dauer des Spülvorganges aktiviert ist und dass das Oxidationsmittel während des Durchflusses von Spülwasser gebildet wird.

4. Spülvorrichtung nach einem der vorhergehenden Ansprüche, **dadurch gekennzeichnet, dass** die Spüleinheit (1) ein Betätigungselement (6) umfasst, mit welchem das Spülventil (6) betätigt wird, wobei das Betätigungselement (6) mit einem Schalter (12) in Verbindung steht, über welchem die elektrochemische Zelle (9) bei Betätigung mit elektrischer Energie versorgt wird, wobei der Schalter (12) nach Betätigung vorzugsweise zeitverzögert öffnet, so dass die elektrochemische Zelle (9) während des gesamten Spülvorgangs aktiviert ist.

5. Spülvorrichtung nach einem der vorhergehenden Ansprüche, **dadurch gekennzeichnet, dass** die Desinfektionseinheit (2) ein von der Spüleinheit (1) separat ausgebildetes Modul ist, oder dass die Desinfektionseinheit (2) und die Spüleinheit (1) eine integrale Einheit bilden.

6. Spülvorrichtung nach einem der vorhergehenden Ansprüche, **dadurch gekennzeichnet, dass** die Mischeinheit (10) ein statischer Mischer ist.

7. Spülvorrichtung nach einem der vorhergehenden Ansprüche, **dadurch gekennzeichnet, dass** die elektrochemische Zelle (9) in einem ersten Aufnahmeraum (14) angeordnet ist, und dass die Mischeinheit (10) in einem zweiten Aufnahmeraum (15) angeordnet ist, welcher in Strömungsrichtung des Spülwassers gesehen nach dem ersten Aufnahmeraum (15) angeordnet ist, wobei die beiden Aufnahmeräume (14, 15) vorzugsweise in einem gemeinsamen Gehäuse angeordnet sind.

8. Spülvorrichtung nach Anspruch 7, **dadurch gekennzeichnet, dass** der erste Aufnahmeraum (14) als Siphon ausgebildet ist, so dass sich dauernd Wasser im ersten Aufnahmeraum (14) befindet.

9. Spülvorrichtung nach einem der vorhergehenden Ansprüche, **dadurch gekennzeichnet, dass** die Desinfektionseinheit (2) modular mit der Spüleinheit (1) und dem Urinal (U) bzw. der Toilette verbindbar ist.

10. Spülvorrichtung nach einem der vorhergehenden Ansprüche, **dadurch gekennzeichnet, dass** die lichte Querschnittsfläche senkrecht zur Durchströmrichtung über die Desinfektionseinheit (2) im wesentlichen konstant bleibt.

11. Urinal (U) oder Toilette umfassend eine Spülvorrichtung nach einem der vorhergehenden Ansprüche.

12. Verfahren zum Betrieb einer Spülvorrichtung nach einem der vorhergehenden Ansprüche, wobei das Spülwasser vor der Zuführung in ein Urinal oder eine Toilette durch Desinfektionseinheit (2) geführt wird, wobei bei und insbesondere auch nach Betätigung der Spüleinheit (1) die elektrochemische Zelle (9) mit elektrischer Energie versorgt wird, so dass während des Durchflusses des Spülwassers das Oxidationsmittel hergestellt wird.

## Claims

1. A flushing device for a urinal (U) or a water closet comprising a flushing unit (1) with a flushing valve (5) and an actuating element (6) for initiating the flushing operation, wherein flushing water is supplied to the urinal (U) or the water closed during the flushing operation, and a disinfecting unit (2) for disinfecting the flushing water, wherein the disinfecting unit (2) comprises an electrochemical cell (9) being arranged in the flushing water for producing an oxidizing agent from the flushing water and a mixing unit (10) for mixing the flushing water with the oxidizing agent, **characterized in that** the disinfecting unit (2) is arranged downstream of the flushing unit (1) when viewed along the flow direction of the flushing water.

2. The flushing device according to claim 1, **characterized in that** the electrochemical cell (9) is arranged in such a way that it is permanently wetted with flushing water.

3. The flushing device according to any one of the preceding claims, **characterized in that** the electrochemical cell (9) is activated essentially only during the duration of the flushing operation, and **in that** the oxidizing agent is formed during the through-flow of flushing water.

4. The flushing device according to any one of the preceding claims, **characterized in that** the flushing unit (1) comprises an actuating element (6) with which the flushing valve (5) is actuated, wherein the actuating element (6) is in connection with a switch (12), by means of which the electrochemical cell (9) is supplied with electrical energy upon actuation, wherein the switch (12) after actuation preferably opens in a time-delayed manner, such that the electrochemical cell (9) is activated during the entire flushing operation.

5. The flushing device according to any one of the preceding claims, **characterized in that** the disinfecting unit (2) is a module which is separately designed from the flushing unit (1), or **in that** the disinfecting unit (2) and the flushing unit (1) form an integral unit.

6. The flushing device according to any one of the preceding claims, **characterized in that** the mixing unit (1) is a static mixer.

7. The flushing device according to any one of the preceding claims, **characterized in that** the electrochemical cell (9) is arranged in a first receiving space (14), and **in that** the mixing unit (10) is arranged in a second receiving space (15), which is arranged downstream of the first receiving space (15) when viewed along the flow direction of the flushing water, wherein the two receiving spaces (14, 15) are preferably arranged in a common housing.

8. The flushing device according to claim 7, **characterized in that** the first receiving space (14) is designed as a siphon, such that water is constantly present in the first receiving space (14).

9. The flushing device according to any one of the preceding claims, **characterized in that** the disinfecting unit (2) is connectable to the flushing unit (1) and the urinal (U) or the toilet in a modular manner.

10. The flushing device according to any one of the preceding claims, **characterized in that** the clear cross-sectional area perpendicular to the through-flow direction over the disinfecting unit (2) remains essentially constant.

11. A urinal (U) or toilet comprising a flushing device according to any one of the preceding claims.

12. Method of operating a flushing device according to any one of the preceding claims, wherein the flushing water is passed through disinfecting unit (2) prior to being fed into a urinal or a toilet, wherein during and in particular also after actuation of the flushing unit (1) the electrochemical cell (9) is supplied with electrical energy, such that the oxidizing agent is produced during the through-flow of the flushing water.

## Revendications

1. Dispositif de rinçage pour un urinoir (U) ou une toilette comprenant une unité de rinçage (1) ayant une soupape de rinçage (5) et un élément d'actionnement (6) pour le déclenchement du procédé de rinçage, où lors du procédé de rinçage l'eau de rinçage est menée ver l'urinoir (U) ou la toilette, et une unité de désinfection (2) pour la désinfection de l'eau de rinçage, où l'unité de désinfection (2) comprend une cellule électrochimique (9) disposée dans l'eau de rinçage pour la génération d'un agent oxydant à partir de l'eau de rinçage et une unité de mélange (10) pour le mélange de l'eau de rinçage avec l'agent oxydant, **caractérisé en ce que** l'unité de désinfection (2) est disposée après l'unité de rinçage (1), vu en direction de flux de l'eau de rinçage.

2. Le dispositif de rinçage selon la revendication 1, **caractérisé en ce que** la cellule électrochimique (9) est disposée de sorte qu'elle est mouillée d'eau de rinçage de manière permanente.

3. Le dispositif de rinçage selon une des revendications précédentes, **caractérisé en ce que** la cellule électrochimique (9) est activée essentiellement uniquement lors de la durée du procédé du rinçage et que l'agent oxydant est formé lors du flux traversant de l'eau de rinçage.

4. Le dispositif de rinçage selon une des revendications précédentes, **caractérisé en ce que** l'unité de rinçage (1) comprend un élément d'actionnement (6), à l'aide duquel la soupape de rinçage (6) est actionnée, où l'élément d'actionnement (6) est en connexion avec un interrupteur (12) à travers duquel la cellule électrochimique (9) est alimentée en énergie électrique lors de l'actionnement, où l'interrupteur (12) s'ouvre préférablement de manière temporellement décalée après l'actionnement de sorte que la cellule électrochimique (9) est activée lors du procédé de rinçage entier.

5. Le dispositif de rinçage selon une des revendications précédentes, **caractérisé en ce que** l'unité de désinfection (2) est un module formé séparément de l'unité de rinçage (1), où que l'unité de désinfection (2) et l'unité de rinçage (1) forment une unité intégrale.

6. Le dispositif de rinçage selon une des revendications précédentes, **caractérisé en ce que** l'unité de mélange (10) est un mélangeur statique.

7. Le dispositif de rinçage selon une des revendications précédentes, **caractérisé en ce que** la cellule électrochimique (9) est disposée dans un premier espace de réception (14) et que l'unité de mélange (10) est disposée dans un deuxième espace de réception (15), lequel, vu en direction de flux de l'eau de rinçage, est disposé après le premier espace de réception (15), où les deux espaces de réception (14, 15) sont préférablement disposés dans un boîtier commun.

8. Le dispositif selon la revendication 7, **caractérisé en ce que** le premier espace de réception (14) est formé en tant que siphon, de sorte que de l'eau se trouve en permanence dans le premier espace de réception (14).

9. Le dispositif de rinçage selon une des revendications précédentes, **caractérisé en ce que** l'unité de désinfection (2) peut être raccordée de manière modulaire avec l'unité de rinçage (1) et l'urinoir (U), respectivement la toilette.

10. Le dispositif de rinçage selon une des revendications précédentes, **caractérisé en ce que** la surface de section transversale intérieure perpendiculaire par rapport à la direction de flux reste essentiellement constante de long de l'unité de désinfection (2).

11. Un urinoir (U) ou une toilette comprenant un dispositif de rinçage selon une des revendications précédentes.

12. Un procédé pour l'opération d'un dispositif de rinçage selon une des revendications précédentes, où avant l'acheminement dans un urinoir ou une toilette, l'eau de rinçage est guidée à travers l'unité de désinfection (2), où lors de et particulièrement également après l'actionnement de l'unité de rinçage (1), la cellule électrochimique (9) est alimentée en énergie électrique, de sorte que l'agent oxydant est généré lors du flux traversant de l'eau de rinçage.
